# FASCICULE DE BREVET EUROPEEN

(11) **EP 3 336 277 B1**
(45) Date de publication et mention de la délivrance du brevet: **15.01.2020**
(21) Numéro de dépôt: 17002018.4
(22) Date de dépôt: 12.12.2017
(51) Int. Cl.: E04F 15/024

(54) **ELÉMENT PORTEUR DE PIÈCES D'ÉCARTEMENT**
HALTEELEMENT FÜR ABSTANDSHALTER
ELEMENT SUPPORTING SPACING PARTS

(30) Priorité: 15.12.2016 BE 201600183
(43) Date de publication de la demande: 20.06.2018
(73) Titulaire: Buzon Pedestal International, 4040 Herstal (BE)
(72) Inventeur: Buzon, Laurent, B-4040 Herstal (BE); Buzon, Claude, B-4040 Herstal (BE); Felten, Patrick, B-4040 Herstal (BE)
(74) Mandataire: Quintelier, Claude

(56) Documents cités:
- WO-A1-99/23327

## Description

La présente invention concerne un élément porteur de pièces d'écartement destiné à être monté sur un plot d'élévation d'une surface, lequel élément porteur comporte un plateau ayant une face supérieure et une face inférieure, lesdites pièces d'écartement étant placées sur la face supérieure de façon à s'étendre en hauteur à partir de cette face supérieure, la face inférieure étant pourvue d'un jeu de pattes agencées pour traverser une ouverture appliquée dans une surface de support du plot d'élévation, lesdites pattes dudit jeu étant disposées autour d'une perforation qui s'étend de la face supérieure à la face inférieure.

Un tel élément porteur est connu de la demande de brevet WO 99/23327 et est commercialisé par la demanderesse. L'élément porteur de pièces d'écartement est destiné à être monté sur un plot d'élévation d'une surface, qui lui-même sert entre autres à compenser l'inclinaison de la surface sur laquelle le plot est placé. Les pièces d'écartement sont placées sur la face supérieure de l'élément porteur, de façon à s'étendre en hauteur à partir de cette face supérieure. Les pièces d'écartement peuvent ainsi venir se loger dans un espace entre deux dalles adjacentes posées sur la face supérieure du plot. Les pièces d'écartement maintiennent ainsi une distance entre deux dalles adjacentes. Le jeu de pattes va traverser l'ouverture appliquée dans la surface de support du plot d'élévation et ainsi permettre de fixer l'élément porteur sur le plot.

Un désavantage de l'élément porteur connu est qu'en cas de fortes rafales de vent, par exemple de l'ordre de 80km/h au plus, l'élément porteur peut se détacher du plot et ainsi perturber la disposition de dalles sur le plots.

L'invention a pour but de réaliser un élément porteur de pièces d'écartement qui puisse être mieux fixé au plot et réduit ainsi la probabilité qu'il se détache en cas de fortes rafales de vent.

A cette fin un élément porteur suivant l'invention est caractérisé en ce que chaque patte comprend une partie de base et une partie de tête reliés entre elles par une partie intermédiaire, la partie de tête ayant une largeur inférieure à celle de la partie de base, la partie de tête ayant une largeur supérieure à celle de la partie intermédiaire, la partie de tête s'étendant le long d'un bord d'un espace qui s'étend dans la prolongation de la perforation. Le fait que la partie de tête s'étend le long d'un bord d'un espace, qui s'étend dans la prolongation de la perforation, permet à une vis de fixation, qui serait visé dans la perforation à partir de la face supérieure du plateau, de venir prendre prise dans cette partie de tête de chaque patte. Puisque la partie intermédiaire a une largeur inférieure à celle de la partie de tête, cela va permettre à la partie de tête de pouvoir pivoter par rapport à la partie de base lorsque la vis de fixation va pénétrer dans cet espace. En effet la force transmise à la partie de tête par la vis de fixation lorsqu'elle se déplace dans l'espace situé dans la prolongation de la perforation, sera transmise à son tour à la partie intermédiaire. La largeur inférieure de cette partie intermédiaire va permettre sous l'effet de cette force un pivotement des parties de tête et intermédiaires. Ce pivotement va avoir pour conséquence que les pattes vont s'écarter pour occuper un plus grand volume sous la face inférieure de l'élément porteur et ainsi s'opposer à un arrachement de l'élément porteur du plot auquel il sera fixé.

Une première forme préférentielle de réalisation d'un élément porteur suivant l'invention est caractérisé ce que la partie de tête possède un premier pourtour comprenant un premier segment, un deuxième segment et un troisième segment, le premier segment étant situé face audit espace, lequel premier segment possède un profil courbé qui épouse celui dudit espace, une première extrémité du premier segment étant relié à l'aide d'un premier segment de liaison au deuxième segment, une deuxième extrémité du premier segment, opposée à la première extrémité, est reliée au troisième segment par un deuxième segment de liaison. Le profil courbé du premier segment peut ainsi s'aligner à l'espace situé dans la prolongation de la perforation et permettre à la vis de fixation de correctement prendre prise dans la partie de tête.

Une deuxième forme préférentielle de réalisation d'un élément porteur suivant l'invention est caractérisé en ce que la partie de base comporte un deuxième pourtour comportant un quatrième segment, un cinquième segment et un sixième segment, le quatrième segment formant un bord extérieur de la patte, une première extrémité du quatrième segment étant reliée à l'aide d'un troisième segment de liaison au cinquième segment, une deuxième extrémité du quatrième segment, opposée à la première extrémité, est reliée au sixième segment par un quatrième segment de liaison. Ceci facilite la pénétration de l'élément porteur dans la perforation.

De préférence un élément porteur suivant l'invention est caractérisé en ce que chaque patte possède une longueur située entre 0,7 et 1.2 cm, en particulier 1 cm. Ceci permet une surface de contact suffisante avec la vis de fixation.

L'invention sera maintenant décrite plus en détails à l'aide des dessins qui illustrent une forme de réalisation d'un élément porteur de pièces d'écartement destiné à être monté sur un plot d'élévation d'une surface. Dans les dessins :
La figure 1 montre un plot d'élévation d'une surface pourvu d'un élément porteur de pièces d'écartement ;
La figure 2 montre une vue de face d'un élément porteur de pièces d'écartement suivant l'invention ;
La figure 3 montre une vue en coupe à travers un élément porteur de pièces d'écartement suivant l'invention;
La figure 4 montre une vue détaillé à une échelle agrandie du jeu de pattes; et
La figure 5 montre à échelle agrandie une patte du jeu de pattes.

Dans les dessins une même référence a été attribué à un même élément ou à un élément analogue.

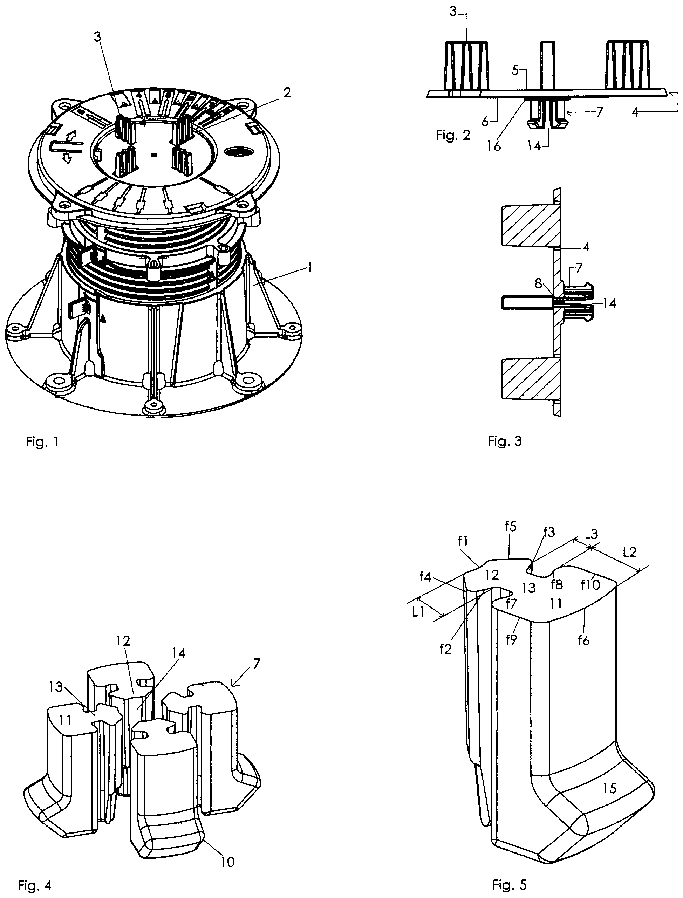

La figure 1 montre un plot d'élévation 1 d'une surface pourvu d'un élément porteur 2 de pièces d'écartement 3. L'élément porteur de pièces d'écartement comporte un plateau 4 et est destiné à être monté de façon détachable sur le plot d'élévation. Il sert à maintenir un écart entre des dalles (non reprises dans la figure) dont un coin repose sur le plot 1. L'élément porteur comporte de préférence quatre pièces d'écartement 3 car en général des coins de quatre dalles seront posés sur le plot. Les pièces d'écartement sont placées sur une face supérieure 5 (voir figure 2) du plateau de l'élément porteur de façon à s'étendre en hauteur à partir de cette face supérieure. Ainsi les pièces d'écartement peuvent s'étendre dans un espace entre deux dalles adjacentes dont un coin est placé sur le plot et servent à maintenir l'écart entre ces dalles adjacentes.

Comme illustré à la figure 2, l'élément porteur comporte également une face inférieure 6 qui est pourvue d'un jeu de pattes 7 agencées pour traverser une ouverture appliquée dans la surface de support du plot d'élévation. Les pattes du jeu de pattes étant disposées autour d'une perforation 8 (voir figure 3) qui s'étend de la face supérieure à la face inférieure du plateau. De préférence le jeu de pattes comporte quatre pattes.

De préférence le jeu de pattes est placé sur une rondelle 16, la rondelle et le jeu de pattes étant fabriqués dans la même matière que l'ensemble. La rondelle permet de retenir l'élément porteur dans le plot.

L'élément porteur est de préférence fabriqué en polypropylène et par moulage. Le polypropylène est généralement utilisé pour la fabrication des plots et offre l'avantage d'être bon marché, résistant à l'humidité et peu sensible aux fluctuations de température.

Comme illustré aux figures 4 et 5 chaque patte 10 comprend une partie de base 11 et une partie de tête 12 reliés entre elles par une partie intermédiaire 13. La partie de tête12 ayant une largeur L1 inférieure à celle L2 de la partie de base 11. La partie de tête ayant une largeur L1 supérieure à celle L3 de la partie intermédiaire. La partie de tête de chaque patte s'étend le long d'un bord de l'espace 14 qui s'étend dans la prolongation de la perforation 8. De cette façon la partie de tête peut entrer directement en contact avec une vis de fixation (non reprise dans le dessin) qui sera visée dans la perforation et s'étendra dans cette prolongation, comme il sera décrit plus en détails ci-dessous. De préférence chaque patte possède une longueur située entre 0,7 et 1.2 cm, en particulier 1 cm. Ceci permet d'avoir suffisamment de matière présente dans laquelle la vis de fixation pourra pénétrer.

De préférence la partie de tête 12 possède un premier pourtour comprenant un premier segment f1 et un deuxième segment f2. Le premier pourtour comporte également un troisième segment f3. Le premier segment f1 est situé face à l'espace 14 situé dans la prolongation de la perforation 8. Le premier segment f1 possède un profil courbé qui épouse celui dudit espace. Une première extrémité du premier segment f1 est relié à l'aide d'un premier segment de liaison f4 au deuxième segment f2. Le premier segment de liaison f4 forme un angle obtus avec le premier segment f1. Une deuxième extrémité du premier segment f1, opposée à la première extrémité, est reliée au troisième segment f3 par un deuxième segment de liaison f5. Ce dernier forme également un angle obtus avec le premier segment f1. Les angles obtus permettent à la partie de tête d'avoir une surface qui s'ouvre à partir du premier segment. Le premier et le deuxième segment de liaison forment également partie du pourtour de la partie de tête.

La première et la deuxième extrémité du premier segment sont de préférence arrondies pour faciliter un démoulage lors d'une fabrication par moulage des éléments porteurs. Il en va de même pour les extrémités du deuxième f2 et du troisième f3 segment qui sont reliées à leur segment de liaison respectif. Le deuxième et le troisième segment forment également un angle sensiblement droit avec le premier f4, respectivement le deuxième f5, segment de liaison.

La partie de base 11 possède de préférence un deuxième pourtour comportant un quatrième segment f6 et un cinquième segment f7. Le deuxième pourtour comporte également un sixième segment f8. Le quatrième segment formant un bord extérieur de la patte. Une première extrémité du quatrième segment f6 est relié à l'aide d'un troisième segment de liaison f9 au cinquième segment f7. Le troisième segment de liaison f9 forme un angle sensiblement droit avec le quatrième segment f6. Une deuxième extrémité du quatrième segment f6, opposée à la première extrémité, est reliée au sixième segment f8 par un quatrième segment de liaison f10. Ce dernier forme également un angle sensiblement droit avec le quatrième segment f6.

Tout comme c'est le cas pour le segment de tête, les extrémités des segments de la partie de base sont de préférence arrondies pour faciliter le démoulage. Les cinquième et sixième segments sont de préférence courbés vers l'intérieur du segment de base pour rigidifier la structure de la partie de base et pour ainsi permettre d'accroître la largeur de la partie intermédiaire lui donnant ainsi plus de débattement par rapport à la partie de base. La partie de base sert essentiellement comme support pour la partie de tête et est pour cette raison d'une largeur supérieure à celle de la partie de tête.

De préférence la partie de base possède un pied 15 qui s'étend à partir du quatrième segment f6. De préférence le pied comporte une pointe angulaire. Le pied facilite l'entrée de la patte dans la perforation 8 lors du montage de l'élément porteur sur le plot.

Pour monter l'élément porteur sur le plot on passera le jeu de pattes dans une ouverture prévue dans la surface de support du plot d'élévation. La présence du pied 15 facilite cette introduction car il contribue à resserrer les pattes entre elles. L'élément porteur sera poussé dans l'ouverture du plot jusqu'à ce que la rondelle 16 vienne se loger dans cette ouverture. Pour améliorer la fixation de l'élément porteur sur le plot et ainsi empêcher que de fortes rafales de vent viennent déloger cet élément porteur une vis de fixation sera introduite dans la perforation 8. Le fait de viser cette vis de fixation dans la perforation va provoquer que cette vis de fixation va entrer en contact avec la partie de tête 12 et plus particulièrement avec le premier segment f1. La forme courbée du premier segment va faciliter la prise du pas de vis de la vis de fixation dans ce premier segment. Le fait que le premier segment est relié au segment intermédiaire 13 va faire que le premier segment va pouvoir pivoter par rapport au segment intermédiaire et ainsi permettre à la vis de fixation de bien s'ancrer dans cette partie de tête. Ce bon ancrage et la flexibilité de la partie de tête permettent à leur tour que la vis de fixation fera écarter les pattes par rapport à la perforation et contribueront ainsi à mieux retenir l'élément porteur dans l'ouverture du plot.

## Revendications

1. Elément porteur (2) de pièces d'écartement (3) destiné à être monté sur un plot (1) d'élévation d'une surface, lequel élément porteur comporte un plateau (4) ayant une face supérieure (5) et une face inférieure (6), lesdites pièces d'écartement étant placées sur la face supérieure de façon à s'étendre en hauteur à partir de cette face supérieure, la face inférieure étant pourvue d'un jeu (7) de pattes (10) agencées à prendre prise dans une ouverture appliquée dans une surface de support du plot d'élévation, lesdites pattes (10) dudit jeu (7) étant disposées autour d'une perforation (8) qui s'étend de la face supérieure à la face inférieure, **caractérisé en ce que** chaque patte (10) comprend une partie de base (11) et une partie de tête (12) reliés entre elles par une partie intermédiaire (13), la partie de tête ayant une largeur (L1) inférieure à celle (L2) de la partie de base, la partie de tête ayant une largeur supérieure à celle (L3) de la partie intermédiaire, la partie de tête s'étendant le long d'un bord d'un espace (14) qui s'étend dans la prolongation de la perforation.

2. Elément porteur selon la revendication 1, **caractérisé en ce que** la partie de tête possède un premier pourtour comprenant un premier segment (f1), un deuxième segment (f2) et un troisième segment (f3), le premier segment (f1) étant situé face audit espace (14), lequel premier segment (f1) possède un profil courbé qui épouse celui dudit espace, une première extrémité du premier segment (f1) étant relié à l'aide d'un premier segment de liaison (f4) au deuxième segment (f2), une deuxième extrémité du premier segment (f1), opposée à la première extrémité, est reliée au troisième segment (f3) par un deuxième segment de liaison (f5).

3. Elément porteur selon la revendication 2, **caractérisé en ce que** le premier (f4) et le deuxième (f5) segment de liaison forment chacun un angle obtus avec le premier segment (f1).

4. Elément porteur selon la revendication 2 ou 3, **caractérisé en ce que** le deuxième (f2) et le troisième (f3) segment forment chacun un angle sensiblement droit avec le premier (f4), respectivement le deuxième (f5), segment de liaison.

5. Elément porteur selon la revendication 2, 3 ou 4, **caractérisé en ce que** la première et le deuxième extrémité du premier segment est arrondie.

6. Elément porteur selon l'une des revendications 1 à 5, **caractérisé en ce que** la partie de base comporte un deuxième pourtour comportant un quatrième segment (f6), un cinquième segment (f7) et un sixième segment (f8), le quatrième segment formant un bord extérieur de la patte, une première extrémité du quatrième segment (f6) étant reliée à l'aide d'un troisième segment de liaison (f9) au cinquième segment f7, une deuxième extrémité du quatrième segment (f6), opposée à la première extrémité, est reliée au sixième segment (f8) par un quatrième segment de liaison (f10).

7. Elément porteur selon l'une des revendications 1 à 6, **caractérisé en ce que** chaque patte possède une longueur située entre 0,7 et 1.2 cm, en particulier 1 cm.

8. Elément porteur selon la revendication 6, **caractérisé en ce que** la partie de base possède un pied (15) qui s'étend à partir du quatrième segment.

9. Elément porteur selon la revendication 8, **caractérisé en ce que** le pied comporte une pointe angulaire.

10. Elément porteur selon l'une des revendications 1 à 9, **caractérisé en ce que** le jeu de pattes est placé sur une rondelle (16), la rondelle et le jeu de pattes étant fabriqués dans la même matière que l'ensemble.

## Patentansprüche

1. Trägerelement (2) für Abstandshalter (3), das dazu bestimmt ist, auf einem Klotz (1) zur Anhebung einer Oberfläche angebracht zu werden, wobei das Trägerelement eine Platte (4) aufweist, die eine obere Seite (5) und eine untere Seite (6) hat, wobei die Abstandshalter so auf der oberen Seite angeordnet sind, dass sie sich von dieser oberen Seite in die Höhe erstrecken, wobei die untere Seite mit einem Satz (7) von Klauen (10) versehen ist, die angeordnet sind, um Halt in einer Öffnung zu nehmen, die in einer Oberfläche zum Tragen des Klotzes zur Anhebung ausgebildet ist, wobei die Klauen (10) des Satzes (7) um eine Perforation (8) angeordnet sind, die sich von der oberen Seite zu der unteren Seite erstreckt, **dadurch gekennzeichnet, dass** jede Klaue (10) einen Basisabschnitt (11) und einen Kopfabschnitt (12) umfasst, die durch einen Zwischenabschnitt (13) miteinander verbunden sind, wobei der Kopfabschnitt eine Breite (L1) hat, die kleiner als diejenige (L2) des Basisabschnitts ist, wobei der Kopfabschnitt eine Breite hat, die größer als diejenige (L3) des Zwischenabschnitts ist, wobei sich der Kopfabschnitt entlang einer Kante eines Raums (14) erstreckt, der sich in der Verlängerung der Perforation erstreckt.

2. Trägerelement nach Anspruch 1, **dadurch gekennzeichnet, dass** der Kopfabschnitt einen ersten Umfang besitzt, der ein erstes Segment (f1), ein zweites Segment (f2) und ein drittes Segment (f3) umfasst, wobei das erste Segment (f1) zu dem Raum (14) gewandt liegt, wobei das erste Segment (f1) ein gekrümmtes Profil besitzt, das an dasjenige des Raums angepasst ist, wobei ein erstes Ende des ersten Segments (f1) mit Hilfe eines ersten Verbindungssegments (f4) mit dem zweiten Segment (f2) verbunden ist, wobei ein zweites Ende des ersten Segments (f1), das dem ersten Ende gegenüberliegt, durch ein zweites Verbindungssegment (f5) mit dem dritten Segment (f3) verbunden ist.

3. Trägerelement nach Anspruch 2, **dadurch gekennzeichnet, dass** das erste (f4) und das zweite (f5) Verbindungssegment mit dem ersten Segment (f1) jeweils einen stumpfen Winkel bilden.

4. Trägerelement nach Anspruch 2 oder 3, **dadurch gekennzeichnet, dass** das zweite (f2) und das dritte (f3) Segment jeweils einen im Wesentlichen rechten Winkel mit dem ersten (f4) bzw. dem zweiten (f5) Verbindungssegment bilden.

5. Trägerelement nach Anspruch 2, 3 oder 4, **dadurch gekennzeichnet, dass** das erste und das zweite Ende des ersten Segments abgerundet sind.

6. Trägerelement nach einem der Ansprüche 1 bis 5, **dadurch gekennzeichnet, dass** der Basisabschnitt einen zweiten Umfang aufweist, der ein viertes Segment (f6), ein fünftes Segment (f7) und ein sechstes Segment (f8) aufweist, wobei das vierte Segment eine Außenkante der Klaue bildet, wobei ein erstes Ende des vierten Segments (f6) mit Hilfe eines dritten Verbindungssegments (f9) mit dem fünften Segment f7 verbunden ist, wobei ein zweites Ende des vierten Segments (f6) gegenüber dem ersten Ende durch ein viertes Verbindungssegment (f10) mit dem sechsten Segment (f8) verbunden ist.

7. Trägerelement nach einem der Ansprüche 1 bis 6, **dadurch gekennzeichnet, dass** jede Klaue eine Länge besitzt, die zwischen 0,7 und 1,2 cm, insbesondere 1 cm, ist.

8. Trägerelement nach Anspruch 6, **dadurch gekennzeichnet, dass** der Basisabschnitt einen Fuß (15) besitzt, der sich von dem vierten Segment erstreckt.

9. Trägerelement nach Anspruch 8, **dadurch gekennzeichnet, dass** der Fuß eine eckige Spitze aufweist.

10. Trägerelement nach einem der Ansprüche 1 bis 9, **dadurch gekennzeichnet, dass** der Satz von Klauen auf eine Scheibe (16) aufgesetzt ist, wobei die Scheibe und der Satz von Klauen aus dem gleichen Material wie die Anordnung hergestellt sind.

## Claims

1. Spacer parts (3) carrying element (2) provided for being mounted on a pedestal (1) for raising a surface, which carrying element comprises a plate (4) having an upper face (5) and a lower face (6), said spacer parts being placed on the upper face in such a manner as to extend upwards as from this upper face, said lower face being provided with a set (7) of legs (10) provided for gripping into an opening applied in a carrying surface of the pedestal, said legs(10) of said set (7) being applied around a perforation (8) extending from the upper towards the lower face, **characterised in that** each leg (10) comprises a base part (11) and a head part (12) connected among each other by an intermediate part (13), the head part (12) having a width (L1) inferior to the one (L2) of the base part, the head part having a width superior to the one (L3) of the intermediate part, the head part extending along a border of a space (14) extending in an extension of the perforation.

2. Spacer parts carrying element as claimed in claim 1, **characterised in that** the head part comprises a first circumference having a first segment (f1), a second segment (f2) and a third segment (f3), the first segment (f1) facing said space (14), which first segment (f1) comprises a curved profile matching the one of said space, a first end of said first segment (f1) being connected by means of a first liaison segment (f4) to the second segment (f2), a second end of the first segment (f1), opposite the first end, is connected to the third segment (f3) by means of a second liaison segment (f5).

3. Spacer parts carrying element as claimed in claim 2, **characterised in that** the first (f4) and second (f5) liaison segment each form an obtuse angle with the first segment (f1).

4. Spacer parts carrying element as claimed in claim 2 or 3, **characterised in that** the second (f2) and third (f3) segment each form a substantially right angle with the first (f4), respectively the second (f5), liaison segment.

5. Spacer parts carrying element as claimed in claim 2, 3 or 4 , **characterised in that** the first and second end of the first segment is rounded.

6. Spacer parts carrying element as claimed in anyone of the claims 1 to 5, **characterised in that** the base part comprises a second circumference having a fourth segment (f6), a fifth segment (f7) and a sixth segment (f8), the fourth segment forms an exterior border of the leg, a first end of the fourth segment (f6) being connected by means of a third liaison segment (f9) to the fifth segment (f7), a second end of the fourth segment (f6), opposite to the first end, being connected to the sixth segment (f8) by a fourth liaison segment (f10).

7. Spacer parts carrying element as claimed in anyone of the claims 1 to 6, **characterised in that** each leg has a length situated between 0.7 and 1.2 cm, in particular 1 cm.

8. Spacer parts carrying element as claimed in claim 6, **characterised in that** the base part has a foot (15) extending as from the fourth segment.

9. Spacer parts carrying element as claimed in claim 8, **characterised in that** the foot comprises an angled endpoint.

10. Spacer parts carrying element as claimed in anyone of the claims 1 to 9, **characterised in that** the set of legs is placed on a washer (16), which washer and the set of legs being manufactured in the same material as the set.
